# DEMANDE DE BREVET EUROPEEN

(11) **EP 2 789 556 A1**
(43) Date de publication de la demande: **15.10.2014**
(21) Numéro de dépôt: 14163180.4
(22) Date de dépôt: 02.04.2014
(51) Int. Cl.: B65G 47/08, B65G 25/02

(54) **Convoyeur permettant la formation d'au moins un lot de produits**

(30) Priorité: 09.04.2013 FR 1353171
(71) Demandeur: SIDEL PARTICIPATIONS, 76930 Octeville-sur-Mer (FR)
(72) Inventeur: Devaux, Eric, 21910 CORCELLES LES CÎTEAUX (FR); Germain, Dominique, 21910 CORCELLES LES CÎTEAUX (FR)
(74) Mandataire: Eltzer, Thomas

(57) **Abrégé**

L'invention concerne notamment un convoyeur permettant la formation et le déplacement d'au moins un lot de produits (4) à partir d'une file de produits alignés les uns derrière les autres, dans au moins un couloir au niveau d'un poste (11) amont, ledit convoyeur comportant, au niveau d'un poste (11) amont, un tapis de déplacement desdits produits (4), et un dispositif de déplacement d'une quantité prédéterminée de produits (4) parmi ladite file de produits (4), entre ledit poste (11) amont et un poste (12) aval, le dispositif de déplacement comportant des éléments (70, 71) de prise aptes à être mis en contact avec lesdits produits (4). Le dispositif est remarquable en ce que ledit tapis comporte une ouverture traversante, en ce que ledit dispositif de déplacement est disposé sous ledit au moins un couloir, et en ce que lesdits éléments (70, 71) de prise sont montés mobiles par rapport audit dispositif de déplacement, entre une position escamotée et une position de prise.

## Description

L'invention concerne un convoyeur qui permet la formation d'un ou de plusieurs lots de produits à partir d'une file de produits.

Dans les convoyeurs, il est usuel de former une ou plusieurs files de produits alignés les uns derrière les autres, afin de les amener à un poste de conditionnement.

Les produits peuvent être au touche à touche, ou espacés les uns des autres d'un pas prédéterminé.

Usuellement encore, les produits sont guidés dans des couloirs délimités latéralement par des parois, et ils reposent par leur fond au moins partiellement sur une sole mobile. La sole mobile peut être réalisée par une ou plusieurs bandes de convoyage, ou bien encore par un tapis mobile, par exemple.

On connait différentes manières de créer des lots de produits à partir d'une rangée de produits accumulés les uns derrière les autres : on peut par exemple prévoir une butée mobile sur le convoyeur, du type taquet, qui laisse passer une quantité prédéterminée de produits à intervalles réguliers. On peut également prévoir un poussoir latéral sur le convoyeur, qui décale latéralement une rangée de produits comprenant une quantité prédéterminée de produits, cette quantité dépendant de la longueur dudit poussoir.

Une fois la rangée de produits isolée (grâce au système avec taquet ou grâce au système avec poussoir), une tête de préhension peut venir saisir le lot de produits, qu'elle conditionne éventuellement dans un carton. Certaines têtes de préhension permettent même de créer plusieurs lots de produits à partir d'une quantité prédéterminée de produits saisis. Une telle tête de préhension est, par exemple, décrite dans le document FR 2 974 573.

L'inconvénient du poussoir est qu'il ne permet pas d'isoler plusieurs lots de produits en même temps, lorsque les produits arrivent sur plusieurs couloirs parallèles entre eux.

Les taquets, placés judicieusement, peuvent permettre de créer plusieurs lots de produits arrivant dans des couloirs parallèles entre eux. Toutefois, cette solution n'est pas évolutive, c'est-à-dire qu'elle ne permet pas autre chose que d'arrêter à intervalles réguliers, le flux de produits arrivant en file, de façon à en libérer une quantité prédéterminée formant un lot de produits.

L'invention vise à proposer une solution technique alternative qui permet non seulement de former des lots de produits à partir d'une file de produits, mais qui permet également de les déplacer, et éventuellement de modifier le pas entre les produits. Par ailleurs, la solution technique de l'invention peut être mise en oeuvre sur un convoyeur comportant un ou plusieurs couloirs dans lesquels les produits arrivent alignés les uns derrière les autres.

Par ailleurs encore, l'invention permet de créer des lots de produits à partir de files de produits convoyés dans des godets, appelés couramment « puck ».

L'invention concerne à cet effet un procédé de convoyage permettant la formation et le déplacement d'au moins un lot de produits à partir d'une file de produits alignés les uns derrière les autres dans au moins un couloir, au niveau d'un poste amont, ledit procédé permettant le déplacement dudit lot de produits entre ledit poste amont et un poste aval. De façon connue en soi, le procédé met en oeuvre :
- au niveau du poste amont, un tapis de déplacement desdits produits,
- et entre le poste amont et le poste aval, un dispositif de déplacement d'une quantité prédéterminée de produits parmi ladite file de produits,
le dispositif de déplacement comportant des éléments de prise apte à être mis en contact avec lesdits produits.

Selon l'invention, le procédé est remarquable en ce que le dispositif de déplacement est disposé initialement sous ledit au moins un couloir, en ce que ledit tapis comporte une ouverture traversante, et en ce que ledit dispositif de déplacement réalise les étapes suivantes :
- mise en contact de chacun des éléments de prise du dispositif de déplacement avec un fond des produits parmi ladite quantité prédéterminée de produits, au niveau dudit poste amont, la mise en contact étant réalisée par déplacement des éléments de prise entre une position escamotée et une position de prise,
- déplacement desdits éléments de prise jusqu'audit poste aval,
- dégagement des éléments de prise des produits, par déplacement des éléments de prise entre la position de prise et la position escamotée, au niveau dudit poste aval, et
- retour dudit dispositif de déplacement sous ledit poste amont.

Ainsi réalisé, le procédé conforme à l'invention saisit les produits par le dessous, ce qui permet de libérer de l'espace au dessus du convoyeur, ce qui rend l'installation compacte et permet aussi de traiter des produits qui arrivent en étant en contact les uns à la suite des autres. Par ailleurs, le procédé permet de faire un référencement de produits, c'est-à-dire qu'il permet de créer des groupes de produits à partir d'une file de produits alignés les uns derrière les autres.

Le procédé conforme à l'invention peut également comporter les caractéristiques suivantes, prises séparément ou en combinaison :
- entre l'étape de mise en contact et l'étape de déplacement, le procédé peut comporter une étape de verrouillage de la position de chacun des éléments de prise sur le fond des produits ;
- les éléments de prise peuvent comporter des dents de préhension des produits et l'étape de verrouillage peut comporter un déplacement des dents de préhension ;
- l'étape de dégagement peut se faire par déverrouillage des éléments de prise, puis déplacement des éléments de prise entre la position de prise et la position escamotée ;
- pendant l'étape de déplacement, les éléments de prise peuvent être écartés les uns des autres et, pendant l'étape de retour, les éléments de prise peuvent être resserrés entre eux.

Par ailleurs, l'invention vise également un convoyeur permettant la formation et le déplacement d'au moins un lot de produits à partir d'une file de produits alignés les uns derrière les autres, dans au moins un couloir au niveau d'un poste amont, ledit convoyeur comportant :
- au niveau d'un poste amont, un tapis de déplacement desdits produits,
- et un dispositif de déplacement d'une quantité prédéterminée de produits parmi ladite file de produits, entre ledit poste amont et un poste aval, le dispositif de déplacement comportant des éléments de prise aptes à être mis en contact avec lesdits produits.

Le convoyeur conforme à l'invention est remarquable en ce que ledit tapis comporte une ouverture traversante, en ce que ledit dispositif de déplacement est disposé sous ledit au moins un couloir, et en ce que lesdits éléments de prise sont montés mobiles par rapport audit dispositif de déplacement, entre une position escamotée et une position de prise.

Conformément à l'invention, le convoyeur peut également présenter les caractéristiques suivantes, prises séparément ou en combinaison :
- ledit dispositif de déplacement peut comporter :
   o au moins un premier peigne, comprenant des dents fixes constituant au moins en partie lesdits éléments de prise, lesdites dents fixes étant séparées les unes des autres d'une distance prédéterminée, correspondant à une distance souhaitée entre les produits audit poste aval, lesdites dents fixes étant orientées vers le fond des produits, et
   o au moins un second peigne, comprenant des secondes dents mobiles par rapport auxdites dents fixes, ledit second peigne étant monté mobile par rapport audit premier peigne ;
- ledit dispositif de déplacement peut comporter au moins un vérin assurant la mobilité du second peigne par rapport audit premier peigne, et ledit au moins un vérin peut comporter une tige portée par ledit premier peigne et un corps porté par ledit second peigne ;
- les premier et second peignes peuvent être montés mobiles en translation verticale sur un chariot, le chariot étant monté mobile entre le poste amont et le poste aval ;
- lesdits produits peuvent être des godets, autrement appelés « pucks » par l'homme du métier, les godets étant aptes à accueillir chacun un produit de seconde nature et les godets présentant des logements d'accueil des éléments de prise ;
- les logements peuvent présenter chacun une forme allongée pour permettre un déplacement des éléments de prise ;
- les godets peuvent comporter des rainures périphériques au voisinage de leur fond ;
- les éléments de prise peuvent être montés rotatifs sur ledit dispositif de déplacement, pour permettre une orientation desdits produits.

L'invention concerne enfin une installation comportant au moins deux convoyeurs tels que définis ci-dessus.

Suivant l'invention, les convoyeurs d'une telle installation peuvent comprendre des chariots qui présentent des courses de longueurs différentes entre le poste amont et le poste aval de sorte que, au poste aval, les groupes de produits puissent arriver décalés les uns par rapport aux autres.

Pour pouvoir être exécutée, l'invention est exposée de façon suffisamment claire et complète dans la description suivante qui est, en plus, accompagnée de dessins dans lesquels :
- la figure 1 montre une partie d'une installation conforme à l'invention, vue en perspective de dessus, l'installation étant équipée d'un convoyeur conforme à l'invention ;
- la figure 2 montre un dispositif de déplacement d'un convoyeur conforme à l'invention, vu en perspective d'un côté ;
- la figure 3 montre le dispositif de la figure 2, vu en perspective et de l'autre côté ;
- la figure 4 montre une partie du dispositif de déplacement illustré en figures 2 et 3 ;
- la figure 5 montre l'un des éléments de la partie du dispositif de déplacement montré en figure 4 ;
- la figure 6 est encore une autre vue en perspective partielle du dispositif de déplacement du convoyeur conforme à l'invention ;
- la figure 7 est une vue de côté de la partie de dispositif montrée en figure 4, dans une première position ;
- la figure 8 est également une vue de côté de la partie du dispositif ;
- la figure 9 montre un godet vu en perspective et de profil, conçu pour être utilisé dans une installation conforme à l'invention ;
- la figure 10 est une vue de dessous et en perspective du godet illustré sur la figure 9 ;
- les figures 11 a à 11 g montrent schématiquement les étapes du procédé conforme à l'invention ;
- les figures 12a à 12d montrent une variante de réalisation de l'invention, l'installation étant représentée schématiquement en vue de côté ;
- et la figure 13 montre encore une autre variante d'une installation conforme à l'invention, représentée schématiquement en vue de dessus.

Dans la description qui suit, les termes « inférieur », « supérieur », « haut », « bas » etc... sont utilisés en référence aux dessins pour une plus grande facilité de compréhension. Ils ne doivent pas être compris comme étant des limitations de la portée de l'invention.

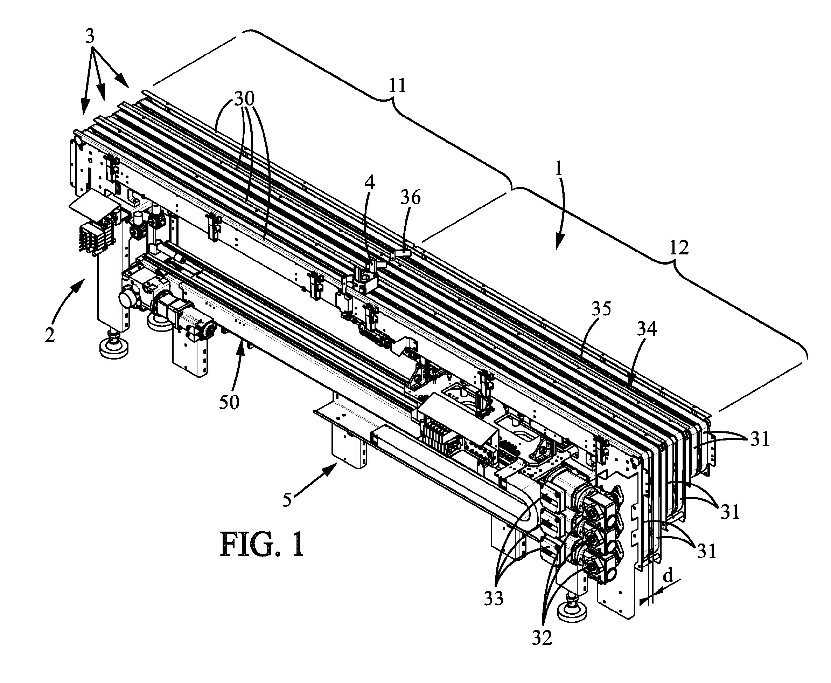

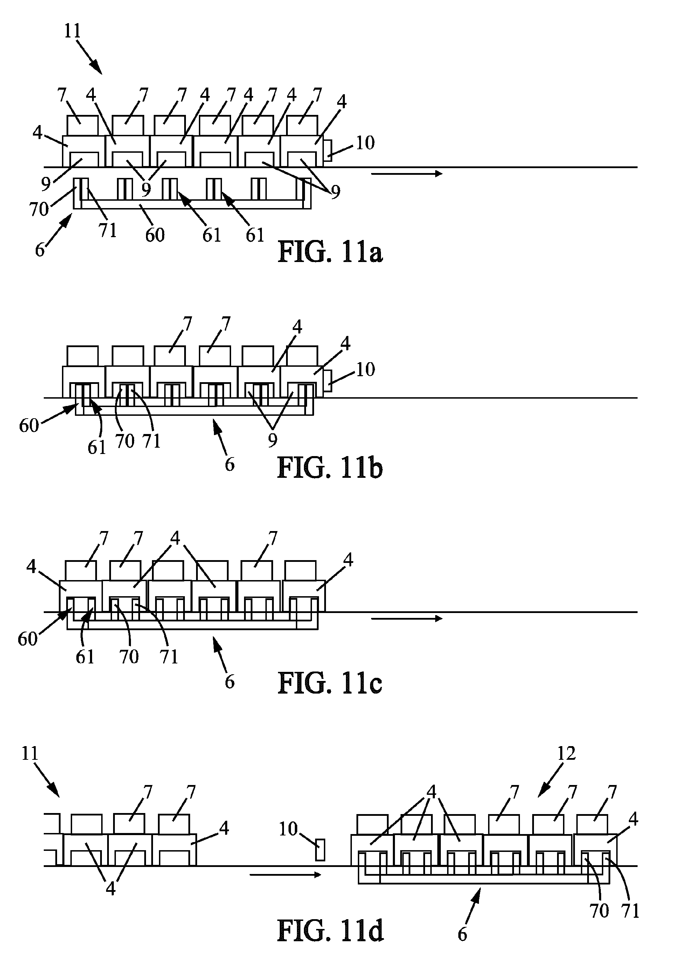

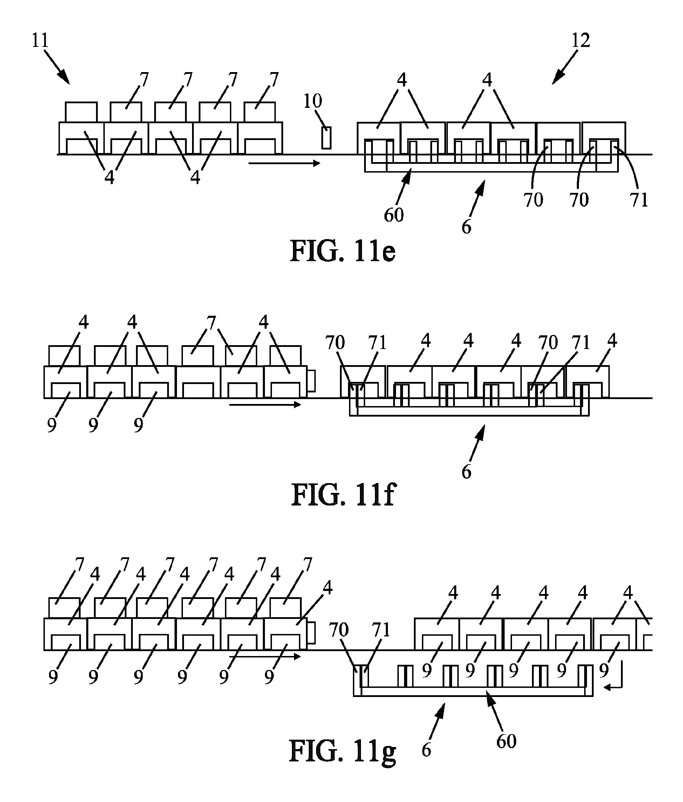

Il va tout d'abord être fait référence à un exemple de convoyeur conforme à l'invention, en se rapportant aux figures 1 à 10. Le procédé sera décrit par la suite, en faisant référence aux figures 11 a à 11 g.

La figure 1 montre un convoyeur 1 conforme à l'invention, comprenant un bâti 2 sur lequel sont montés trois couloirs 3, aptes à recevoir des produits 4 alignés les uns derrière les autres. Tous les produits n'ont pas été représentés, de manière à simplifier la lecture de la figure. Ainsi, seul un produit 4 est visible dans le couloir le plus à gauche du convoyeur 1.

Le produit 4 qui est représenté est un godet - appelé communément « puck » par l'homme du métier. Le godet est un réceptacle qui permet de porter un autre produit, d'une autre nature (par exemple un produits cosmétique, un produit alimentaire...) qui ne saurait pas tenir de façon stable en position debout sur le convoyeur. Il s'agit par exemple de flacons de shampoing de forme particulière ou de sachets souples tels que des « doypack ».

Il devra être compris que l'invention n'est pas limitée à la présence de godets (ou pucks) et qu'elle s'applique au déplacement de toutes sortes de produits, y compris les produits qui ne sont pas convoyés en étant disposés dans des godets.

Chaque couloir 3 est délimité par deux parois latérales 30, et une même paroi latérale 30 peut définir une séparation entre deux couloirs 3 adjacents.

Les couloirs 3 comportent également chacun deux bandes 31 sans fin, parallèles entre elles, écartées d'une distance d.

Les deux bandes 31 sans fin d'un même couloir sont entraînées en déplacement grâce au mouvement de rotation d'un arbre 32 relié à un moteur 33, placé en aval des couloirs 3, et donc du convoyeur 1, dans le cadre de l'exemple représenté sur les figures.

Comme on peut le voir sur la figure 1, chaque paire de bandes 31 de chaque couloir 3 comporte son propre moteur d'entraînement.

Les trois moteurs 33 sont synchronisés dans leur fonctionnement.

Les paires de bandes 31 sans fin forment des tapis 34 pour chacun des couloirs 3, assurant le déplacement des produits 4 qui reposent au moins partiellement sur chaque bande 31.

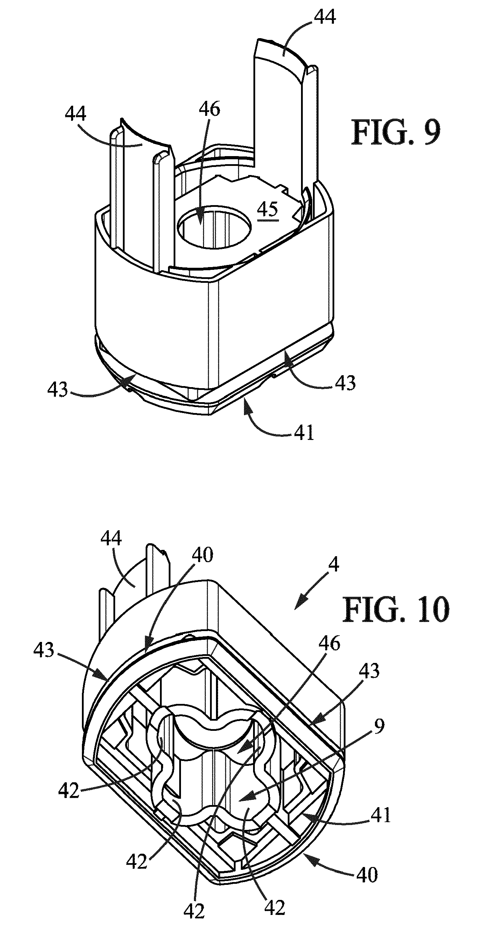

En effet, deux bords 40 opposés des fonds 41 de produits 4 (voir figure 10), reposent chacun sur une bande 31.

Il existe donc un espace 35 entre deux bandes 31, qui définit un passage, ou une ouverture traversante, entre les bandes 31 pour atteindre les fonds 41 des produits 4.

Les couloirs 3 sont également équipés chacun d'une butée 36, mobile entre deux positions, l'une permettant l'arrêt des produits 4 entraînés en déplacement par le tapis 34, et l'autre permettant ledit déplacement des produits 4.

La figure 1 montre les butées 36 en position ne permettant pas le déplacement des produits 4.

En amont des butées 36, on considère que la partie du convoyeur est un poste amont 11. En aval des butées 36, on considère que la partie du convoyeur est un poste aval 12.

Conformément à l'invention, le convoyeur est équipé d'un dispositif 5 permettant le déplacement d'une quantité prédéterminée de produits 4 qui se trouvent alignés les uns derrière les autres, en trois files, dans les couloirs 3.

Le dispositif 5 est positionné sous les couloirs 3, comme on peut le voir sur la figure 1.

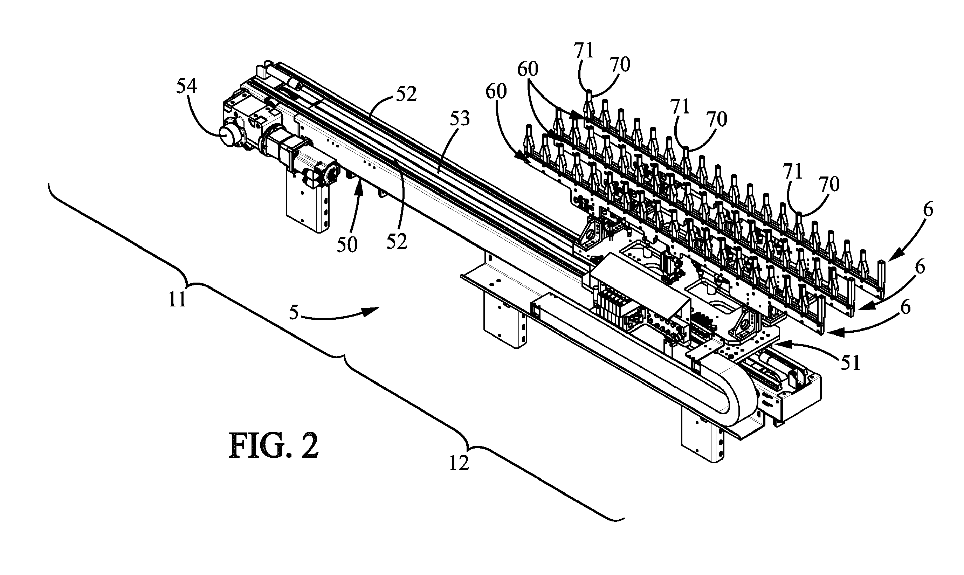

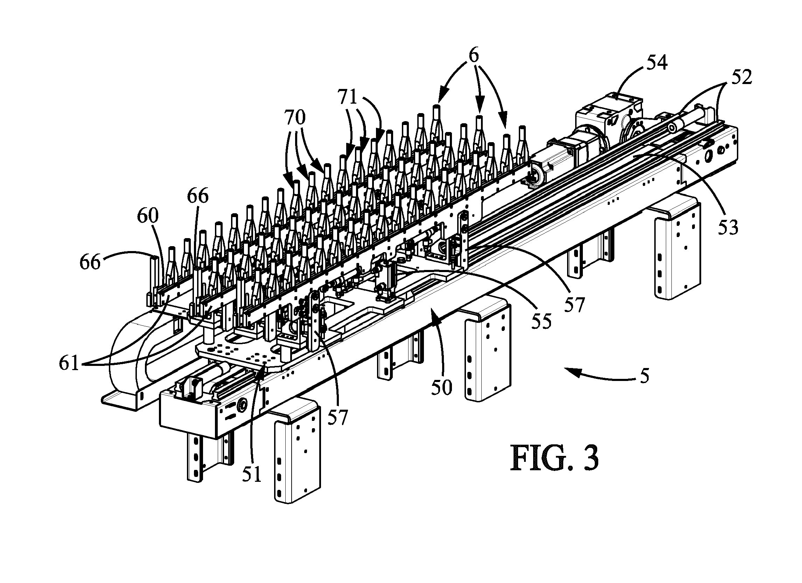

Les figures 2 et 3 montrent uniquement le dispositif 5 de déplacement, qui va maintenant être décrit.

Le dispositif 5 de déplacement comporte son propre bâti 50, sur lequel est monté mobile un chariot 51.

Pour ce faire, le chariot 51 est monté mobile sur deux rails 52, solidaires du bâti 50. Le chariot 51 est, par ailleurs, relié à une courroie 53 crantée, entraînée en déplacement grâce à un moteur 54.

La bande sans fin s'étend sur toute la longueur du convoyeur 1, de sorte que l'entraînement en déplacement de la courroie 53 crantée entraîne en déplacement le chariot entre le poste 11 amont et le poste 12 aval du convoyeur.

Comme on peut le voir sur les figures 2 et 3, le chariot 51 porte trois groupes 6 de peignes.

Les trois groupes 6 de peignes sont parallèles entre eux.

Chaque groupe 6 de peignes comprend deux peignes 60 et 61 : un premier peigne 60 comprend des dents 70 qui sont orientées vers le haut, et qui sont fixes par rapport au chariot 51. Un second peigne 61 comprend des dents 71 qui sont également orientées vers le haut et qui sont montées mobiles par rapport au chariot 51.

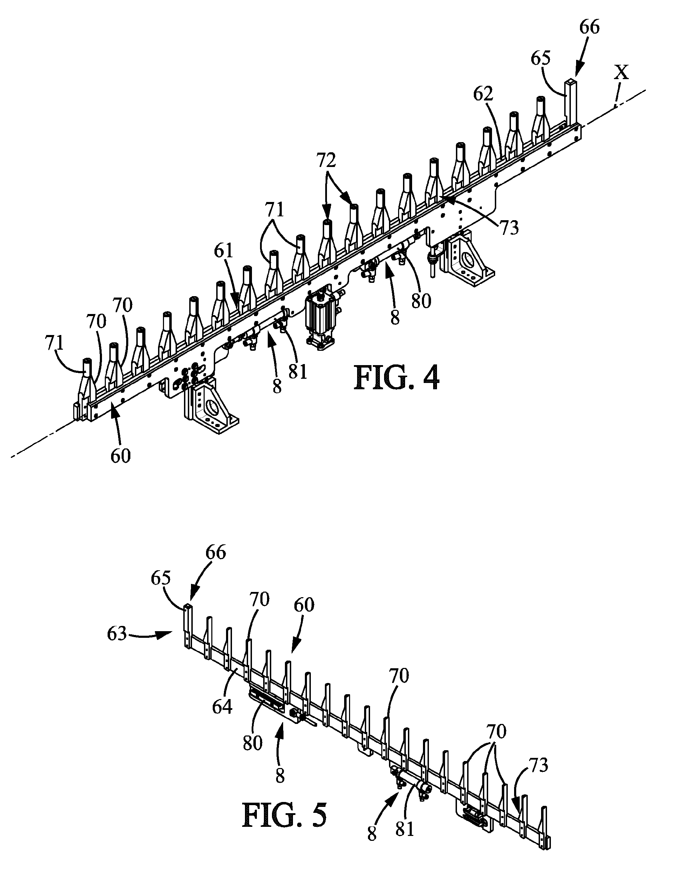

Plus précisément, le peigne 61 est monté mobile par rapport au peigne 60, par glissement du peigne 61 par rapport au peigne 60 suivant un axe longitudinal, cet axe correspondant sensiblement à l'axe d'une barre 62 (voir figure 4) du peigne 61, la barre 62 reliant toutes les dents 71 du peigne 61 entre elles.

La figure 5 montre uniquement le peigne 60 qui est fixe. On note que, à une extrémité 63 d'une barre 64 reliant toutes les dents 70 entre elles, se trouve un élément 65 formant une butée 66. La butée 66 permet de protéger les peignes d'une collision avec des produits en cours d'évacuation en aval.

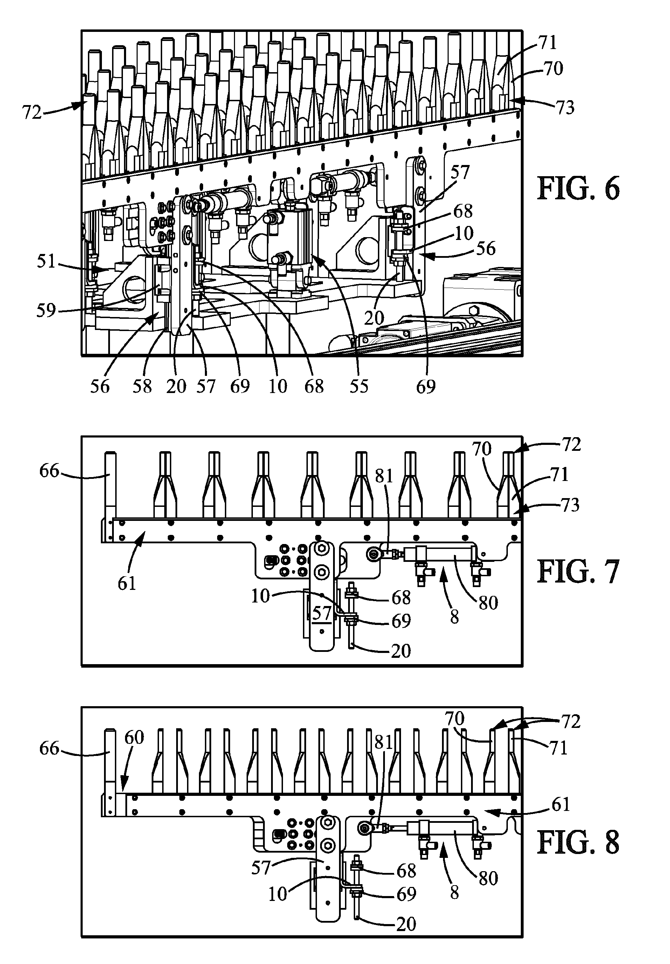

On note également que les dents 71 du peigne 61 et que les dents 70 du peigne 60 présentent des formes sensiblement symétriques, de sorte que, quand les dents 71 et 70 sont positionnées l'une contre l'autre, elles forment ensemble, à leur extrémité 72 libre, un doigt de forme cylindrique (voir figures 4 et 6).

Chaque dent 71 ou 70 présente donc une forme de demi-cylindre à son extrémité 72 libre.

L'autre extrémité 73 des dents (celle qui est reliée à la barre 62 ou 64) présente une forme de demi-pyramide, ce qui renforce la résistance de sa base.

Les dents 70 et 71 constituent des éléments de prise qui sont aptes à être mis en contact avec les produits 4. La façon dont le contact se fait sera exposée par la suite.

Les dents 70 et 71, quand elles sont en position où elles se rejoignent, sont écartée d'un pas prédéterminé.

Ce pas correspond à la distance qui sépare deux logements 9 (figure 10) ménagés dans deux produits 4 adjacents. Ces logements seront également décrits par la suite.

La course du peigne 61 mobile par rapport au peigne 60 fixe est limitée, dans un sens, par la butée 66 mentionnée ci avant. Dans le sens inverse, la course du peigne 61 mobile par rapport au peigne 60 fixe est limitée par la course d'au moins un vérin 8, réglée préalablement. Dans l'exemple illustré en figure 4, on prévoit deux vérins 8 pour relier le peigne 60 fixe et le peigne 61 mobile.

Les vérins 8 comportent, de façon connue, une chambre 80 dans laquelle se trouve un piston relié à une tige 81.

Chaque peigne 60 ou 61 est relié soit à une chambre 80 d'un piston 8, soit à une tige d'un piston 8. Autrement dit, l'un des pistons 8 comporte une chambre 80 qui est reliée à un peigne 60 fixe, et une tige 81 relié au peigne 61 mobile. L'autre piston 8 comporte une chambre 80 reliée au peigne 61 mobile, et une tige 81 reliée au peigne 60 fixe. De cette façon, lorsque les tiges 81 sortent des chambres 80 des pistons 8, les peignes 60 et 61 s'écartent l'un de l'autre par déplacement du peigne 61 mobile.

Les peignes 60 et 61 comportent également des moyens assurant leur guidage l'un par rapport à l'autre quand le peigne 61 mobile se déplace : par exemple, on voit sur la figure 5 que la barre 64 du peigne 60 fixe comporte un rail 67, dans lequel peut être monté mobile un élément longitudinal porté par la barre 62 du peigne 61 mobile (non visible sur les figures - toutefois, l'homme du métier connait de tels moyens de guidage).

Comme on peut le voir sur la figure 2, le dispositif de déplacement comporte trois groupes 6 de peignes, chaque groupe de peignes agissant dans un couloir.

Conformément à l'invention, chaque groupe 6 de peignes, dont les dents 70 et 71 constituent les éléments de prise, est monté mobile en translation verticale sur le chariot 51, entre deux positions :
- une position escamotée suivant laquelle les peignes 60 et 61 (et donc les dents 70 et 71) sont à un niveau en dessous du niveau des couloirs 3 qui est suffisant pour que les dents 70 et 71 ne touchent pas les produits 4 ;
- et une position de prise, suivant laquelle les peignes 60 et 61 sont à un niveau tel que les dents 70 et 71 peuvent s'engager dans les logements 9 des produits 4.

Autrement dit, les dents 70 et 71, qui forment les éléments de prise du dispositif de déplacement, sont montées mobiles sur le dispositif 5 de déplacement.

Pour ce faire, et comme on peut le voir en particulier sur la figure 4 ou sur la figure 6, chaque groupe 6 de peignes 60 et 61 est associé à un mécanisme de déplacement vertical, tel qu'un vérin 55.

Le vérin 55 est relié au groupe 6 de peignes sensiblement au milieu des barres 62 et 64.

Pour assurer un maintien des groupes 6 de peignes lors de leur passage entre la position escamotée et la position de prise (ou inversement), on prévoit pour chaque groupe 6 de peignes deux éléments 56 de guidage vertical, de part et d'autre du vérin 55.

Chaque élément 56 comporte notamment un bras 57, solidaire d'un patin 58 saillant qui s'étend sur une partie de sa surface (voir figure 6) ainsi qu'un rail 59, fixe sur le chariot 51, dans lequel le patin 58 est monté mobile en déplacement.

La course des groupes 6 de peignes 60 et 61 est limitée par deux butées 68 (butée haute) et 69 (butée basse) reliées à un axe 20 vertical. Pour ce faire, un prévoit un taquet 10, solidaire du bras 57, monté libre en déplacement autour de l'axe 20 entre les deux butées 68 et 69.

La hauteur de déplacement des groupes 6 de peignes 60 et 61 peut ainsi aisément être réglée, en déplaçant les butées 68 et 69 sur l'axe 20.

Comme on peut le voir sur les figures 2 et 3 en particulier, chaque groupe 6 de peignes comporte un nombre prédéterminé de dents 70 et 71.

Le nombre de dents prédéterminé correspond au nombre de produits 4 que l'on souhaite isoler de la file de produits 4 (dans les couloirs 3) pour créer un lot de produits apte à être saisi en aval par une tête de préhension.

Ainsi, on constate qu'avec le dispositif 5 de déplacement montré sur les figures, qui comprend trois groupes 6 de peignes, on peut saisir et déplacer trois lots de dix-huit produits 4.

Comme indiqué précédemment, les produits 4 sont ici des godets ou « pucks », qui sont conçus pour accueillir des produits qui ne sont pas stables lorsqu'ils sont déplacés en position debout.

Les figures 9 et 10 montrent les godets 4 qui sont conçus expressément pour autoriser leur saisi par leur fond 41.

Comme indiqué également précédemment, les godets 4 comportent un logement 9 qui traverse leur fond (voir figure 10).

Les logements 9 présentent une section en croix. Lorsque les dents 70 et 71 resserrées sont introduites dans les logements, elles sont introduites sensiblement au milieu des croix. Pour saisir un godet 4, les dents 70 et 71 sont écartées jusqu'à exercer une pression sur les bords 42 internes opposés des croix. C'est pourquoi la forme du logement 9 doit être allongée, au moins suivant une direction, pour permettre le déplacement des dents 70 et 71 (donc des éléments de prise).

Dans le cas de la forme en croix, on considère que le logement 9 présente une forme allongée dans deux directions qui sont les deux directions formant les branches de la forme en croix.

La forme des bords 42 internes opposés des logements en croix correspond à la forme des dents 70 et 71 - ainsi, il existe une surface de contacte maximale entre les dents 70 et 71, d'une part, et les bords 42 internes opposés d'autre part.

Le logement a une section en forme de croix pour permettre une orientation à 90° des godets 4 dans les couloirs 3 : en effet, il peut arriver qu'il soit nécessaire d'orienter les produits suivant une certaine direction avant de les saisir et de la conditionner dans des emballages, de manière que les informations présentées sur les produits soient directement lisibles par le consommateur lorsqu'il ouvre les emballages.

On note par ailleurs que, sur la figure 10, le bord périphérique du godet 4 contigüe au fond 41 présente une gorge 43. La gorge 43 permet de faire glisser les godets 4 dans des rails latéraux internes des couloirs 3, de sorte que les godets 4 soient maintenus par leur côté le long des couloirs. Cela procure non seulement une stabilité au godet 4 lors de son convoyage, mais cela permet également de maintenir le godet 4 en position lors du retrait du produit qu'il accueille.

Pour accueillir les produits de seconde nature (représentés schématiquement sur les figures 11 a à 11g - voir plus loin), les godets 4 comportent chacun deux parois 44 sensiblement courbes et symétriques, entre lesquelles les produits de seconde nature sont insérés.

Les godets 4 peuvent également comprendre un fond 45 intermédiaire, c'est-à-dire un fond sur lequel repose le produit de seconde nature et qui se trouve à un niveau supérieur à celui du fond 41 du godet 4.

Sur la figure 9, on voit que le fond 45 comporte une lumière 46 traversante. Cette lumière peut servir de logement à un bouchon ou à une tête d'un flacon positionné « tête en bas » (par exemple un tube de produit pharmaceutique), de manière à augmenter la stabilité du produit de seconde nature introduit dans le godet 4.

Le procédé de fonctionnement du convoyeur va maintenant être décrit en faisant références aux figures 11a à 11g.

Les godets 4 arrivent sur la partie 11 amont du convoyeur 1 en étant alignés les uns derrière les autres et au touche à touche. Les godets 4 sont arrêtés dans leur course par le taquet 10.

Les godets 4 transportent eux-mêmes des produits 7 de seconde nature (symbolisés par des rectangles sur les figures 11a à 11g).

Suivant la position initiale du cycle de préhension et de déplacement d'un lot de godets 4, un groupe 6 de peignes 60 et 61 se trouve positionné sous la file de godets 4 portant des produits 7 de seconde nature, les dents 70 et 71 étant en position escamotée (figure 11a).

Dans un second temps, le groupe de peignes 60 et 61 est déplacé entre la position escamotée et la position de prise (figure 11b) en déplaçant vers le haut le groupe 6 de peignes 60, 61, de sorte que les dents 70 et 71 pénètrent dans les logements 9 des godets. Les éléments de prise sont ainsi mis en contact avec le fond des godets 4.

Dans un troisième temps, la position des dents 70 et 71 dans les logements 9 des godets 4 est verrouillée. Pour ce faire, les dents 70 et 71 sont déplacées par glissement du peigne 61 par rapport au peigne 60. Cette étape de verrouillage a pour conséquence de déplacer sensiblement le lot de godets 4 saisi. C'est pourquoi on escamote le taquet 10, formant butée en amont de la file de godets 4, en même temps que l'on verrouille la position des dents 70 et 71 dans les logements 9 (voir figure 11c).

La figure 11 d illustre l'étape suivante, conformément à laquelle le lot de godets 4 saisi est déplacé jusqu'au poste 12 aval. On note que, pendant ce déplacement, les godets 4 du poste 11 amont se déplacent de nouveau et se rapprochent du taquet 10.

La figure 11 e montre que, une fois le lot de godets 4 arrivé au poste 12 aval, les produits 7 qu'ils transportent sont saisis par une tête de préhension pour être conditionnés, ou à tout le moins déplacés, vers un autre poste de l'installation.

Lors du retrait des produits 7, les godets 4 sont maintenus par les éléments de prise, c'est à dire par les dents 70 et 71 qui retiennent les godets - le produit 7 peut donc être légèrement coincé dans le godet 4 sans que cela ne soit gênant pour l'étape d'extraction de produits 7 des godets 4.

Une fois les godets 4 déchargés de leur produits 7, les dents 70 et 71 sont resserrées les unes contre les autres en déplaçant le peigne 61 par rapport au peigne 60. C'est ainsi que l'on déverrouille les éléments de prise des logements 9 des godets 4. Pendant ce temps, les godets 4 du poste 11 amont continuent d'avancer jusqu'à venir en butée contre le taquet 10 (voir figure 11 f).

Au post aval, le groupe 6 de peignes 60, 61 est alors déplacé vers le bas, de sorte à dégager les dents 70 et 71 des logements 9 des godets 4. Ainsi, les éléments de prise sont escamotés entre la position de prise et la position escamotée (figure 11g). Le groupe 6 de peignes 60, 61 est alors ramené en position initiale de manière à saisir un autre lot de godets 4 au post amont.

On comprend de la description qui précède comment le convoyeur conforme à l'invention permet de déplacer un lot de produits en saisissant lesdits produits par le dessous, ce qui permet notamment de traiter des produits qui se touchent dans une même colonne.

Dans les exemples qui viennent d'être décrits, les produits sont des godets qui présentent un logement pour accueillir l'élément de prise - les godets sont guidés, par ailleurs, sur les côtés des couloirs.

L'invention ne s'applique toutefois pas uniquement à la préhension de godets, et à des godets tels que ceux décrits et illustrés sur les figures 9 et 10.

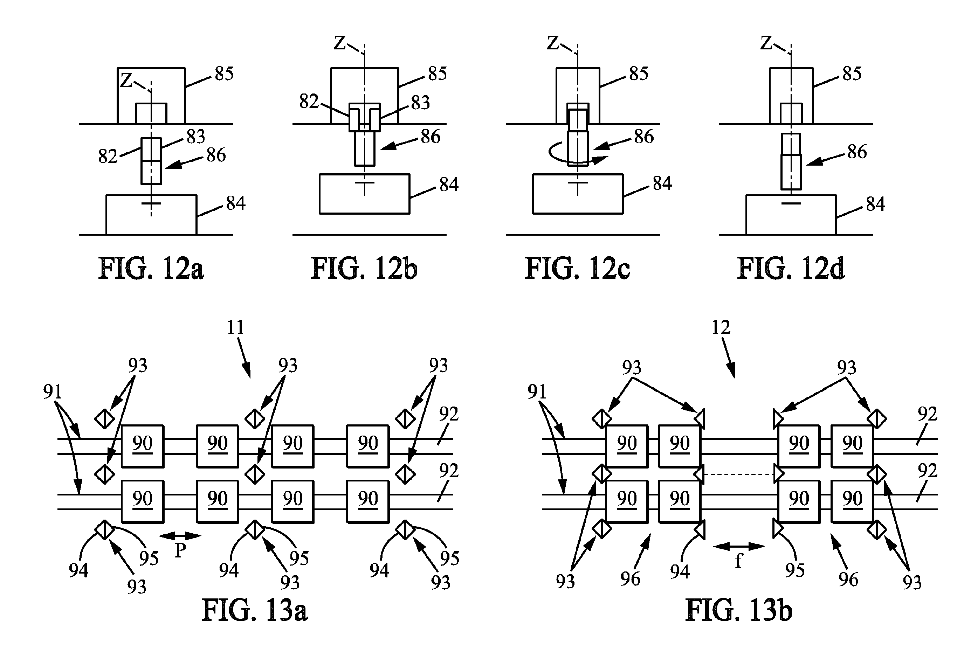

Par exemple, l'invention pourrait s'appliquer à d'autres types de godets tels que ceux illustrés sur les figures 12a à 12 d.

De tels godets sont conçus pour pivoter autour de leur axe. Cela permet par exemple d'orienter les produits pour qu'ils se présentent d'une certaine façon lorsqu'ils sont conditionnés dans des cartons, comme il a déjà été évoqué précédemment.

Pour permettre cette rotation ou ce pivot des godets autour de leur axe, on prévoit de permettre la rotation des éléments de prise autour de leur axe.

La figure 12a montre un godet 85 sous lequel se trouve un élément 86 de prise comprenant deux dents 82 et 83, mobiles entre une position verrouillée (figure 12b) et une position déverrouillée (figure 12a ou 12d).

L'élément 86 de prise est monté pivotant autour de son axe Z sur une base 84. La base 84 est montée mobile en déplacement verticale entre une position de prise (figure 12b et 12c), et une position escamotée (figures 12a et 12d).

Initialement, avant la saisie d'un godet 85, les dents 82 et 83 de l'élément 86 de prise se trouvent en position déverrouillée et la base se trouve en position escamotée (figure 12a).

Pour saisir un produit, la base 84 est déplacée verticalement jusqu'à sa position de prise et les dents 82 et 83 sont déplacée en position verrouillée (figure 12b).

En figure 12c, on voit le godet 85 qui est pivoté d'un angle de 90 degrés par rapport à sa position illustrée en figure 12b, par rotation de l'élément 86 de prise sur la base 84.

La figure 12d montre le dégagement de l'élément 86 de prise du godet 85, en déverrouillant les dents 82 et 83 et en abaissant la base 84 en position escamotée.

L'invention peut également s'appliquer à la réalisation de lots de produits, grâce au regroupement des produits entre eux.

Sur la figure 13a, on voit des produits 90 répartis sur deux voies 91 et espacés d'un pas p prédéterminé.

Les produits 90 sont déplacés en reposant sur une bande 92 sans fin, chaque voie présentant une bande 92 sans fin.

La figure 13a montre le poste 11 amont du convoyeur et la figure 13b montre le poste 12 aval.

Les éléments de prise, portant la référence 93, comportent deux dents 94 et 95 mobiles l'une par rapport à l'autre et mobiles en déplacement entre le poste 11 amont et le poste 12 aval.

Les éléments 93 de prise sont disposés entre deux bandes 92 sans fin, autrement dit entre les deux voies 91. D'autres éléments 93 sont également disposés de part et d'autre des deux bandes 92 sans fin, de sorte que les deux bandes 92 sans fin sont entre deux rangées d'éléments 93.

De façon équivalente au procédé décrit ci avant, assurant la mise en contact des éléments 93 de prise avec les produits 90, les éléments de prise sont déplacés verticalement et les dents 94 et 95 sont, au moins pour certaines d'entre elles, verrouillés en position contre au moins deux produits 90 adjacents. De cette façon, les éléments 93 de prise permettent de déplacer les produits 90, par contact avec ces derniers.

En déplaçant deux dents 94 et 95 l'une par rapport à l'autre (flèche f sur la figure 13b) on crée des lots de quatre produits chacun, car le déplacement des dents 94 et 95 l'une par rapport à l'autre permet de rapprocher certains produits entre eux, formant ainsi deux lots 96 de quatre produits 90 chacun.

## Revendications

1. Procédé de convoyage permettant la formation et le déplacement d'au moins un lot de produits (4) à partir d'une file de produits (4) alignés les uns derrière les autres dans au moins un couloir (3), au niveau d'un poste (11) amont,
ledit procédé permettant le déplacement dudit lot de produits (4) entre ledit poste (11) amont et un poste (12) aval,
ledit procédé mettant en oeuvre :
- au niveau du poste (11) amont, un tapis (34) de déplacement desdits produits (4),
- et entre le poste (11) amont et le poste (12) aval, un dispositif (5) de déplacement d'une quantité prédéterminée de produits (4) parmi ladite file de produits (4),
le dispositif (5) de déplacement comportant des éléments (70, 71) de prise apte à être mis en contact avec lesdits produits (4),
**caractérisé en ce que** le dispositif (5) de déplacement est disposé initialement sous ledit au moins un couloir (3),
**en ce que** ledit tapis (34) comporte une ouverture (35) traversante et **en ce que** ledit dispositif (5) de déplacement réalise les étapes suivantes :
- mise en contact de chacun des éléments (70, 71) de prise du dispositif (5) de déplacement avec un fond (41) des produits (4) parmi ladite quantité prédéterminée de produits (4), au niveau dudit poste (11) amont, la mise en contact étant réalisée par déplacement des éléments (70, 71) de prise entre une position escamotée et une position de prise,
- déplacement desdits éléments (70, 71) de prise jusqu'audit poste (12) aval,
- dégagement des éléments (70, 71) de prise des produits (4), par déplacement des éléments (70, 71) de prise entre la position de prise et la position escamotée, au niveau dudit poste (12) aval, et
- retour dudit dispositif (5) de déplacement sous ledit poste (11) amont.

2. Procédé selon la revendication 1, **caractérisé en ce que**, entre l'étape de mise en contact et l'étape de déplacement, le procédé comporte une étape de verrouillage de la position de chacun des éléments (70, 71) de prise sur le fond (41) des produits (4).

3. Procédé selon la revendication 2, **caractérisé en ce que** les éléments (70,71) de prise comportent des dents (70, 71) de préhension des produits (4) et **en ce que** l'étape de verrouillage comporte un déplacement des dents (70, 71) de préhension.

4. Procédé selon l'une quelconque des revendications précédentes, **caractérisé en ce que** l'étape de dégagement se fait par déverrouillage des éléments (70, 71) de prise, puis déplacement des éléments (70, 71) de prise entre la position de prise et la position escamotée.

5. Procédé selon l'une quelconque des revendications précédentes, **caractérisé en ce que** pendant l'étape de déplacement, les éléments (70, 71 ; 94, 95) de prise sont écartés les uns des autres et **en ce que** pendant l'étape de retour, les éléments (70, 71 ; 94, 95) de prise sont resserrés entre eux.

6. Convoyeur permettant la formation et le déplacement d'au moins un lot de produits (4) à partir d'une file de produits (4) alignés les uns derrière les autres, dans au moins un couloir (3) au niveau d'un poste (11) amont, ledit convoyeur comportant :
- au niveau d'un poste (11) amont, un tapis (34) de déplacement desdits produits (4),
- et un dispositif (5) de déplacement d'une quantité prédéterminée de produits (4) parmi ladite file de produits (4), entre ledit poste (11) amont et un poste (12) aval, le dispositif (5) de déplacement comportant des éléments (70, 71) de prise aptes à être mis en contact avec lesdits produits (4),
**caractérisé en ce que** ledit tapis (34) comporte une ouverture (35) traversante
**en ce que** ledit dispositif (5) de déplacement est disposé sous ledit au moins un couloir (3), et **en ce que** lesdits éléments (70, 71) de prise sont montés mobiles par rapport audit dispositif (5) de déplacement, entre une position escamotée et une position de prise.

7. Convoyeur selon la revendication 6, **caractérisé en ce que** ledit dispositif (5) de déplacement comporte
- au moins un premier peigne (60), comprenant des dents (70) fixes constituant au moins en partie lesdits éléments (70, 71) de prise, lesdites dents (70) fixes étant séparées les unes des autres d'une distance prédéterminée, correspondant à une distance souhaitée entre les produits (4) audit poste (12) aval, lesdites dents (70) fixes étant orientées vers le fond (41) des produits (4), et
- au moins un second peigne (61), comprenant des secondes dents (71) mobiles par rapport auxdites dents (70) fixes, ledit second peigne (61) étant monté mobile par rapport audit premier peigne (60).

8. Convoyeur selon la revendication 7, **caractérisé en ce que** ledit dispositif (5) de déplacement comporte au moins un vérin (8) assurant la mobilité du second peigne (61) par rapport audit premier peigne (60), et **en ce que** ledit au moins un vérin (8) comporte une tige (81) portée par ledit premier peigne (60) et un corps (80) porté par ledit second peigne (61).

9. Convoyeur selon l'une quelconque des revendications 7 ou 8, **caractérisé en ce que** les premier (60) et second (61) peignes sont montés mobiles en translation verticale sur un chariot (51), le chariot (51) étant monté mobile entre le poste (11) amont et le poste (12) aval.

10. Convoyeur selon l'une quelconque des revendications 6 à 9, **caractérisé en ce que** lesdits produits (4) sont des godets, aptes à accueillir chacun un produit (7) de seconde nature et **en ce que** les godets (4) présentent des logements (9) d'accueil des éléments (70, 71) de prise.

11. Convoyeur selon la revendication 10, **caractérisé en ce que** les logements (9) présentent chacun une forme allongée pour permettre un déplacement des éléments (70, 71) de prise.

12. Convoyeur selon la revendication 10 ou 11, **caractérisé en ce que** les godets (4) comportent des rainures (43) périphériques au voisinage de leur fond (41).

13. Convoyeur selon la revendication 6, **caractérisé en ce que** les éléments (86) de prise sont montés rotatifs sur ledit dispositif (84) de déplacement, pour permettre une orientation desdits produits (85).

14. Installation comportant au moins deux convoyeurs selon l'une quelconque des revendications 6 à 13

15. Installation selon la revendication 14, dont les convoyeurs comprennent les caractéristiques de la revendication 11, **caractérisée en ce que** les chariots (51) présentent des courses de longueurs différentes entre le poste (11) amont et le poste (12) aval de sorte que, au poste (12) aval, les groupes de produits (4) arrivent décalés les uns par rapport aux autres.
